# EUROPÄISCHE PATENTSCHRIFT

(11) **EP 3 013 139 B1**
(45) Veröffentlichungstag und Bekanntmachung des Hinweises auf die Patenterteilung: **23.04.2025**
(21) Anmeldenummer: 14733093.0
(22) Anmeldetag: 26.06.2014
(51) Int. Cl.: G02F 1/00, A01G 9/14, A01G 9/24, G02F 1/01

(54) **GEWÄCHSHAUS-BEDACHUNG MIT TEMPERATURABHÄNGIGER STRAHLUNGSTRANSPARENZ UND VERFAHREN ZUR KULTIVIERUNG VON NUTZPFLANZEN**
GREENHOUSE ROOF WITH TEMPERATURE-DEPENDENT RADIATION TRANSPARENCY AND METHOD FOR CULTIVATION OF CROPS
TOIT DE LA SERRE AVEC UNE TRANSPARENCE DÉPENDANT DE LA TEMPÉRATURE ET PROCÉDÉ DE CULTURE DES PLANTES

(30) Priorität: 27.06.2013 DE 102013010702
(43) Veröffentlichungstag der Anmeldung: 04.05.2016
(73) Patentinhaber: TropoTherm, S.L., 04131 Retamar (Almeria) (ES)
(72) Erfinder: RODRIGUEZ CABEO, Emilio, 38527 Meine (DE)
(74) Vertreter: Kröncke, Rolf
(86) Internationale Anmeldenummer: PCT/EP2014/001746
(87) Internationale Veröffentlichungsnummer: WO 2014/206565

(56) Entgegenhaltungen:
- EP-A1- 1 258 504
- DE-A1- 19 642 886
- DE-A1- 19 943 169
- DE-A1- 3 436 477
- DE-A1- 4 408 156
- DE-A1- 4 433 090
- DE-C1- 19 841 234
- US-A- 4 772 506

## Beschreibung

Die Erfindung betrifft eine Pflanzenbau-Bedachung aus Folien- oder Plattenmaterial mit einer temperaturabhängigen Strahlungstransparenz. Weiterhin betrifft die Erfindung ein Masterblend für die Herstellung einer temperaturabhängig transparenten Folie oder Kunststoffschicht geeignet für eine Pflanzenbau-Bedachung. Schließlich betrifft die Erfindung ein Verfahren zur Kultivierung von Nutzpflanzen unter einer erfindungsgemäßen Pflanzenbau-Bedachung.

Im Pflanzenbau ist es vielfach üblich, bestimmte Kulturen unter Folienabdeckungen, in Gewächshäusern oder unter anderen Bedachungen zu ziehen. Je nach Klimazone und Kultur kann dies beispielsweise der Wärmezufuhr durch Zurückhalten des Sonnenlichts oder zusätzliche Heizung dienen. Bei starken Temperaturunterschieden zwischen Tag und Nacht kann das Abdecken oder die Gewächshausüberdachung ein zu starkes Auskühlen über Nacht verhindern. Gewächshäuser und Abdeckungen halten außerdem ggf. die Feuchtigkeit besser auf der Kultur oder ermöglichen auch, je nach Aufbau, ein besseres Abtrocknen durch die gehaltene Wärme. Gerade bei Gewächshäusern und anderen Bedachungen ist auch eine zusätzliche Abschattung der Kulturen gegen zu intensive Sonneneinstrahlung möglich, beispielsweise mit Jalousien
oder Sonnensegeln. Eine solche mechanische Abschattung ist jedoch mit einem großen technischen Aufwand und daher auch mit höheren Kosten verbunden.

In südlichen Ländern ist es vielfach üblich, Gewächshäuser und sonstige Bedachungen in besonders heißen Perioden mit hoher Sonneneinstrahlung zu kalken. Dabei wird eine Kalklösung auf die Dächer aufgebracht und verhindert dort, dass die Sonnenstrahlung vollständig durch das Glas oder die Folie hindurch dringen kann. Das Kalken erhöht vor allem die Lichtreflexion. Auch das Einkalken bringt zusätzlichen Kostenaufwand mit sich, nämlich für das Material selbst, dessen Transport und die Arbeitsgänge beim Einkalken und beim Abwaschen, wenn höhere Lichttransmission erforderlich ist. Die Lichtabschattung ist beim Kalken nicht selbstadaptiv und die Pflanzenwuchsbedingungen sind nicht optimal.

Für Gewächshäuser und andere Bedachungen setzen sich zunehmend Kunststofffolien durch, die in ihrer Elastizität, Haltbarkeit und UV-Beständigkeit seit Jahren verbessert werden konnten. Kunststoffe können mit Hilfe von Additiven, aber auch durch die Veränderung der Kunststoffe selbst in vielen physikalischen Eigenschaften gut beeinflusst werden, was u.a. die Entwicklung selbstabschattender und das Pflanzenwachstum beeinflussender Bedachungsfolien gefördert hat.

Anstelle des Kalkens hat man z.B. versucht, die Folien zu Pigmentieren. Die Pigmente bewirken jedoch in der Regel, dass sich die spektrale Zusammensetzung des durchgeleiteten Lichts ändert, was nicht nur auf die Pflanzenentwicklung selbst, sondern auch auf die Anfälligkeit für Pflanzenkrankheiten und die Orientierung von Bestäubungsinsekten Einfluss haben kann. Dies ist meist unerwünscht. Zu den pigmentierten Folien zählen auch die thermochromen Folien, die einen temperaturabhängigen Farbfilter bereitstellen.

Für die Photosynthese und ein gesundes Wachstum benötigt die Pflanze den Spektralbereich von 400 bis 720 Nanometer. Dieser Bereich wird deswegen als "photosynthetisch aktive Strahlung (PAR)" bezeichnet. Diese Wellenlängen sollten die für die Kulturen verwendeten Abdeckungen möglichst unverfälscht durchlassen. Es ist günstig, wenn der Anteil an diffuser Strahlung im PAR-Bereich erhöht wird. Die Durchlässigkeit für diffuse Lichtanteile sollte grundsätzlich hoch bleiben, da dies natürlichen Lichtverhältnissen am besten entspricht. Besonders bei Kulturen, die viel Schatten werfen, bewirkt eine hohe Lichtstreuung eine bessere Lichtversorgung und Photosynthese der unteren Pflanzenteile.

In der Regel wird von den Abdeckungsmaterialien auch eine gute Thermizität, d.h. ein gutes Wärmerückhaltevermögen erwartet. Dies wird klassisch mit Hilfe mineralischer Additive zu den Abdeckungsfolien erzielt. Für eine gute Thermizität soll ein gewisser Infrarotanteil, vor allem an nahem Infrarot im Bereich zwischen 780 und 3000 nm, die Abdeckfolie bzw. das abdeckende Kunststoffmaterial passieren. Dieses Infrarot wird vom Boden absorbiert, teilweise gespeichert und sodann längerwellig allmählich wieder abgegeben. Für das längerwellige, ferne Infrarot mit Wellenlängenbereichen von ca. 3 bis 50 µm soll das Abdeckmaterial praktisch undurchlässig sein, sodass die eingefangene Wärme unter der Abdeckung gehalten werden kann.

Zur Förderung des Pflanzenwachstums in eher kälteren Klimazonen schlägt beispielsweise die DE 10 2004 051 354 A1 (Grafe) ein Kunststoffmaterial für Gewächshausfolien und sonstige Bedachungen für die Landwirtschaft und den Gartenbau vor, das mit Nanopartikeln halbleitender Materialien modifiziert ist. Als Matrixkunststoffe werden teilkristalline Thermoplaste, wie insbesondere Polyethylen, Polypropylen, EVA und PET verwendet. Durch die Dotierung werden hohe Absorptionen im nahen Infrarotbereich bei hohen Lichttransmissionsgraden im PAR-Bereich erzielt. In heißen Klimazonen führen diese Bedachungsmaterialien zu Überhitzungen, da die Folien und Kunststoffmaterialien nicht selbstschattierend sind und die Lichteinstrahlung nicht regulieren können.

Für eine weitere Verbesserung der Vegetationsbedingungen von Gewächshauspflanzen bzw. von mit Abdeckungen und Bedachungen verschiedener Art geschützten Pflanzen, wurden sogenannte thermotrope Gewächshausfolien entwickelt. Unter einem thermotropen Verhalten wird dabei ein solches verstanden, bei dem sich physikalische Eigenschaften, und zwar insbesondere optische Eigenschaften des Materials mit der Temperatur ändern. Dabei ist gewünscht, dass bei niedrigeren Temperaturen eine höhere Lichtdurchlässigkeit gegeben ist und bei höheren Temperaturen eine geringere Lichtdurchlässigkeit bzw. Transparenz. Dies wird häufig durch gezielte Maßnahmen erreicht, die zu höheren Temperaturen eine Trübung bewirken. Die Trübung des Kunststoffmaterials erhöht sich ab einer bestimmten Temperatur im Allgemeinen sprunghaft, was meist auf Entmischungsphänomene bzw. Änderungen der Mikrostruktur, Phasenänderungs- oder Phasenübergangsphänomene oder Brechungsindexdivergenz (z.B. DE 44 33 090 A1) zurückzuführen ist.

So beschreibt die EP 1 218 467 B1 (BASF) thermotrope Folien und Folienverbunde mit mindestens einer thermotropen Polymerschicht aus einer zusammengeschmolzenen Polymermischung aus wenigstens zwei Polymerkomponenten mit verschiedenen Brechungsindizes, wobei eine molekulare Mischung der beiden Komponenten eine Trübungstemperatur besitzt, unterhalb derer eine einphasige, transparente Mischung vorliegt und oberhalb derer Entmischung zu den Einzelkomponenten stattfindet und damit - durch die erhöhte Brechung verursacht - eine Trübung und verminderte Transparenz der Schicht bewirkt. Das Material kann zusätzliche Komponenten, wie Vernetzer, Fotoinitiatoren und übliche Zusatzstoffe, wie Weichmacher, Farbstoffe, Pigmente, Stabilisatoren, Verarbeitungshilfsmittel und Rheologieadditive beinhalten. Die thermotrope Folie kann abschließend vernetzt werden. Ihre Eigenschaften beruhen auf einer Mikrostruktur. Die Veränderungen der Transparenz sind reversibel. Die EP 1 218 467 B1 (BASF) nennt zahlreiche Monomere für die beiden Komponenten, die für die thermotrope Polymerfolie oder Polymerschicht eingesetzt werden können. Das Schichtmaterial ist dabei eine Mischung bzw. ein Polymerblend.

Die DE 44 33 090 A1 (Fraunhofer Gesellschaft) beschreibt ganz ähnliche Polymerwerkstoffe, die dort als "thermooptisch" bezeichnet werden. Die Transparenz des Verbunds aus Polymerwerkstoff und einer darin eingebetteten monomeren Verbindung wird durch die temperaturabhängige Brechungsindexdifferenz reversibel verändert. Als eingebettete monomere Verbindungen mit stark temperturabhängigem Brechungsindex werden Alkane vorgeschlagen, die unter einer bestimmten Temperatur kristallin sind und den Polymerwerkstoff transparent machen, oberhalb dieser Temperatur aber amorph/geschmolzen, sodass der Polymerwerkstoff insgesamt trübe und weniger lichtdurchlässig wird. Das bevorzugte Polymer ist ein Polyester. Der Polymerwerkstoff ist als Beschichtung vorgesehen, beispielsweise auf Glas oder Fassadenelementen.

Aus der DE 10 2007 061 513 A1 (Fraunhofer-Gesellschaft) ist es weiterhin bekannt, die thermooptisch aktiven Substanzen, wie oben beschrieben, in so genannte Dotierkapseln einzubringen und damit Polymere auszurüsten, um beispielsweise Sonnenschutzfolien zu erhalten. Bei den Dotierkapseln müssen die optischen Eigenschaften der Kapselwand mit berücksichtigt werden.

In der DE 19841234 C1 wird eine reversible thermotrope Kunststoff-Formmasse, ein Verfahren zu Ihrer Herstellung und Ihre Verwendung beschrieben.

Ein Nachteil der über den Brechungsindex arbeitenden Systeme liegt darin, dass die Größe der Transparenzreduktion bei einer Schalttemperatur wellenlängenabhängig ist, weil jede Lichtbrechung selbst wellenlängenabhängig ist, so dass es zu einer Änderung des Spektrums des einfallenden Lichts kommt.

Generell ist das Ziel eine Verbesserung des Pflanzenwachstums. Es ist anzustreben, den Pflanzen möglichst gute Wachstumsbedingungen zukommen zu lassen.

Die Aufgabe der Erfindung besteht daher darin, die Nachteile im Stand der Technik zu verringern oder zu vermeiden und eine selbstabschattende oder thermotrope Folie oder Platte so zu verbessern, dass sie den Erfordernissen des Pflanzenbaus noch besser gerecht wird.

Diese Aufgabe wird mit einer Pflanzenbau-Bedachung aus Folien- oder Plattenmaterial nach Anspruch 1, ein Verfahren zur Kultivierung von Nutzpflanzen nach Anspruch 13 und ein Masterblend nach Anspruch 15 gelöst.

### Pflanzenbau-Bedachung

Die erfindungsgemäße Pflanzenbau-Bedachung besteht aus einem Folien- oder Plattenmaterial mit einer temperaturabhängigen Strahlungstransparenz, wie grundsätzlich im Stand der Technik bekannt und oben beschrieben. Die temperaturabhängige Strahlungstransparenz wird durch wenigstens eine Kunststoffschicht in oder auf einer Platte oder wenigstens eine Folienschicht innerhalb einer ein- oder mehrschichtigen Folie bereitgestellt. Die temperaturabhängige Strahlungstransparenz äußert sich durch eine reduzierte optische Transparenz oberhalb einer Schalttemperatur. Der Strahlungs- bzw. Lichteinfall auf die Pflanzenbau-Kulturen wird dadurch in Abhängigkeit von der Temperatur reguliert. Unter der Schalttemperatur wird die Temperatur verstanden, bei der sich die optische Transparenz (meist wellenlängenabhängig) zu höheren Temperaturen deutlich und sprunghaft verringert.

Die Differenz der optischen Transparenz zwischen unterhalb und oberhalb der Schalttemperatur wird auch als Schalthub bezeichnet. Im Rahmen dieser Erfindung wird der Schalthub definiert als die Transmissionsverminderung bzw. Transparenzverminderung der Globalstrahlung, bestimmt aus der Differenz des Integrals unter den Transmissionskurven im Wellenlängenbereich zwischen 300 und 3000 nm, bezogen auf die höhere Transmission (Ausgangskurve) unterhalb der Schalttemperatur. Bezogen auf die ursprüngliche Transmission der Folie bzw. des Bedachungsmaterials unterhalb der Schalttemperatur kann der Schalthub dann in Prozent ausgedrückt werden.

Das besondere Kennzeichen der Erfindung ist nun, dass die wenigstens eine Schicht mit der temperaturabhängigen Strahlungstransparenz eine graduelle oder eine zwei- oder mehrstufige Transparenzreduktion zu steigenden Temperaturen in einem Temperaturbereich zwischen 20 °C und 50 °C zeigt, wobei im Falle einer graduellen Transparenzreduktion ein Gesamtschalthub zwischen 3 °C bis 30 °C realisiert wird, oder wobei im Falle einer zwei- oder mehrstufigen Transparenzreduktion das Material in dem gewünschten Temperaturbereich ab 20 °C zu höheren Temperaturen mehrere Schalttemperaturen besitzt. Dies bedeutet, dass die erfindungsgemäße Schicht bzw. das Material mit temperaturabhängiger Strahlungstransparenz anstelle einer Schalttemperatur ein Schalt(Temperatur)Intervall zwischen einer unteren Temperaturgrenze und einer oberen Temperaturgrenze aufweist.

Die Erfindung besitzt zahlreiche Vorteile, die auf dem Schaltintervall beruhen. Ganz wesentlich ist dabei die Optimierung der Bedingungen für die Pflanzen und die bessere Ausnutzung des PAR-Bereichs sowie die Regulierung der eintretenden Wärmestrahlung. Betrachten wir eine erfindungsgemäße Folie mit einem Schaltintervall zwischen der unteren Temperaturgrenze Tₐ und der oberen Temperaturgrenze T_{b}. Eine herkömmliche thermotrope Folie mit einer Schalttemperatur bei Tₐ hätte die Kultur zwar optimal vor zu starker Sonnenlichteinstrahlung und Überhitzung oberhalb Tₐ geschützt, ihr dabei jedoch viel wertvolle PAR-Strahlung entzogen, die für die Photosynthese benötigt wird. Eine herkömmliche Folie mit Schalttemperatur T_{b} hätte zwar mehr für die Pflanze wichtige PAR-Strahlung eingelassen, jedoch schlechter gegen Überhitzung geschützt. Durch mehrere Schalttemperaturen in einem Schaltintervall oder vorzugsweise durch eine graduelle Transparenzreduktion zu steigenden Temperaturen von Tₐ bis T_{b} wird die Pflanze mit so viel Licht wie möglich versorgt und dabei dennoch geschützt. Ein relativ großer Teil der einfallenden PAR-Strahlung wird von direkter PAR-Strahlung in diffuse Strahlung umgewandelt, was sich auf die Pflanzenentwicklung sehr vorteilhaft auswirkt.

Im Gegensatz zu dem bei der Erfindung verwendeten Folien- oder Plattenmaterial wirkt das Einkalken von Gewächshausfolien auf der Strahlungseinfallseite und reflektiert einen Teil dieser Strahlung unmittelbar. Dies bewirkt einen guten Schutz bei großer Hitze, lässt jedoch das Licht für die Pflanzen nahezu vollständig verlorengehen. Im Gegensatz dazu wirkt die Modifizierung des Kunststoffmaterials der thermotropen Kunststoffschicht innerhalb der Folie teils durch Absorbtion und teils durch Streuung, sodass der diffuse Lichtanteil, der für die Pflanzenkultur sehr wesentlich ist, gegenüber dem reinen Kalken stark erhöht wird. Das Schaltintervall kombiniert optimal ein Maximum an durchgelassener PAR-Strahlung mit einer relativ hohen Umwandlung in diffuse Strahlung.

Die Temperaturuntergrenze des Schaltintervalls soll erfindungsgemäß bei wenigstens 20 °C liegen, kann jedoch auch höher, beispielsweise bei ca. 25 °C oder 28 °C oder 30 °C eingestellt werden. Weiter findet die Transparenzreduktion der erfindungsgemäßen Pflanzenbau-Bedachung zwischen 20 und 50 °C, vorzugsweise zwischen 25 und 40 °C statt. Dabei kann das Temperaturintervall bzw. das Schaltintervall kleiner als 30 °C sein und befindet sich erfindungsgemäß innerhalb des Bereichs von 20 bis 50 °C. Auch für eine zwei- oder mehrstufige Transparenzreduktion befinden sich die einzelnen Schalttemperaturen zwischen 20 und 50 °C, weiter vorzugsweise zwischen 25 und 40 °C.

Im Falle eines gradierten Schaltverhaltens macht das Temperaturintervall zwischen der unteren Schaltgrenze (Tₐ) und der oberen Temperaturschaltgrenze (T_{b}) von 3 °C bis 30 °C Temperaturdifferenz aus, vorzugsweise 5 bis 30 °C Temperaturdifferenz und weiter vorzugsweise 10 bis 30 °C Temperaturdifferenz. Der Gesamtschalthub wird innerhalb dieses Temperaturintervalls realisiert.

Im Falle einer zwei- oder mehrstufigen Transparenzreduktion besitzt das Material in dem gewünschten Temperaturbereich ab 20 °C zu höheren Temperaturen mehrere Schalttemperaturen. Vorzugsweise sind dies wenigstens zwei Schalttemperaturen bei 28 °C ± 3 °C und bei 32 °C ± 3 °C. Es können auch mehr als zwei Schalttemperaturen vorgesehen sein, die vorzugsweise zwischen 25 °C und 45 °C liegen und die beiden Schalttemperaturen bei 28 °C und bei 32 °C mit umfassen können.

Das Material, das die temperaturabhängige Strahlungstransparenz bereitstellt, ist bei der Erfindung grundsätzlich ein Kunststoffmaterial bzw. ein Polymermaterial. Geeignete optisch transparente Kunststoffmaterialien für Folienbedachungen oder sonstige Kunststoffbedachungen sind dem Stand der Technik grundsätzlich bekannt. Es handelt sich dabei in der Regel um teilkristalline Materialien mit guter optischer Transparenz, beispielsweise Polyolefine wie Poly-ethylene, Polypropylene, insbesondere LDPEs sowie Polyethylen-Copolymere wie beispielsweise Ethylen-Butylacrylat-Copolymer oder Ethylen-Vinylacetat-Copolymer (EVA) oder Mischungen bzw. Blends aus derartigen Polymeren. Weiterhin sind Polyester, wie PET als Basisfolienmaterialien geeignet. Diese Folienmaterialien halten als solche kurzwelliges UV-Licht in hohem Maße zurück, was u.a. auf die CH-Einfachbindungen und Doppelbindungen zurückgeht. IR-Strahlung wird demgegenüber teilweise durchgelassen.

Die Pflanzenbau-Bedachung nach der Erfindung lässt vorzugsweise den IR-A-und den IR-B-Anteil in dem Maße durchtreten, dass der durchgelassene gegenüber dem auftreffendem Strahlungsanteil im transparenzreduzierten Zustand (dem ON-Modus) des Folien- oder Plattenmaterials um wenigstens 5 %, weiter vorzugsweise um wenigstens 20 % verringert ist. Hierbei handelt es sich um einen unmittelbaren Überhitzungsschutz. Die durchgelassene IR-A- und IR-B-Strahlung wird im Boden resorbiert und allmählich langwellig wieder abgegeben, was einen guten Temperaturausgleich bewirkt. Die Pflanzen erhalten hierdurch ein ausgeglichenes Bodentemperaturklima und einen Schutz gegen Nachtkälte.

Gemäß einer besonders bevorzugten Ausführungsform kann die Pflanzenbau-Bedachung aus einem Folienmaterial hergestellt sein. Abdeck- und Gewächshausfolien sind im Stand der Technik grundsätzlich gut bekannt und werden vielfach verwendet. Für Gewächshäuser werden die Folien in Rahmen eingespannt. Es sind jedoch auch andere Bedachungsformen, z.B. zeltartige Bedachungen, Folientunnel u.dgl. im Gebrauch. Die Anforderungen an Folien für den Gewächshausbau sind für Europa in der DIN EN 13206 sowie KTBL-Arbeitsblatt Nr. 0687 beschrieben. Es sind die verschiedensten Materialien mit Additivierungen kommerziell verfügbar. Als wesentliche Additivbestandteile werden mineralische Zugaben zur Einstellung der Thermizität (IR-C-Sperre) sowie UV-Stabilisatoren eingesetzt. Letztere sollen die Haltbarkeit der Folien sicherstellen. Das Folienmaterial für die Pflanzenbau-Bedachung nach der Erfindung ist vorzugsweise eine Mehrschichtfolie, wobei wenigstens eine darin enthaltene Einzelfolie oder Schicht eine temperaturabhängige Transparenzreduktion bewirkt. Die Mehrschichtfolie kann beispielsweise aus drei Lagen bestehen, wobei Stärken von jeweils 50 µm, 100 µm und 50 µm üblich sind. Die drei Lagen können coextrudiert werden. In vorteilhafter Weise wird die Folie insgesamt in Blasextrusion hergestellt. Vorzugsweise ist die Mittelschicht der Dreischichtfolie oder eine innen liegende Schicht einer Mehrschichtfolie die Schicht mit der temperaturabhängigen Transparenzreduktion. Besonders bevorzugt ist das Matrixpolymer ein LDPE, ein Ethylen-Butylacrylat-Copolymer oder insbesondere ein EVA. Die Gesamtschichtdicke der Mehrschichtfolie oder einer entsprechenden Einschichtfolie beträgt vorzugsweise 150 µm bis 300 µm.

In dem Falle, dass die Pflanzenbau-Bedachung aus einem Plattenmaterial gebildet wird, handelt es sich vorzugsweise um eine Kunststoffplatte, die ein- oder mehrschichtig ausgebildet ist und wenigstens eine Schicht mit temperaturabhängigem Transparenzreduktionsverhalten aufweist. Alternativ kann eine Kunststoffplatte oder eine Glasplatte mit einer Schicht mit temperaturabhängiger Strahlungstransparenz beschichtet sein. Gemäß einer weiteren Ausführungsform kann die Platte aus einer zwischen Glasplatten oder kunststoffplatten eingeschlossenen Folie oder Schicht mit temperaturabhängiger Strahlungstransparenz bestehen. Das Plattenmaterial ist besonders für den Gewächshausbau vorteilhaft. Es kann auch für geständerte Bedachungen verwendet werden, dabei wird beispielsweise eine Platte an ihren vier Ecken auf Pfosten gesetzt, sodass die Pflanzen gegen direkte Sonneneinstrahlung von oben geschützt sind, die Umgebungsluft von der Seite jedoch frei zirkulieren kann.

Grundsätzlich kann das gradierte Schaltverhalten in dem Folien- oder Plattenmaterial oder das alternative zwei- oder mehrstufige Schaltverhalten auf unterschiedliche Weise verwirklicht werden.

Wie oben beschrieben sind zum einen Additive bekannt, die einem Matrixpolymer zugesetzt werden können und bei einer Schalttemperatur eine Transparenzreduktion, im Allgemeinen durch Trübung, bewirken. Zur Verwirklichung der Erfindung können einem Matrixpolymer nun mehrere solcher Additive zugesetzt werden, die jeweils für sich eine bestimmte Schalttemperatur realisieren und die gemeinsam ein mehrstufiges Schaltintervall bereitstellen. Häufig ist es jedoch auch möglich, die erforderlichen Substanzen, d.h. die einzelnen Additive, vorab zu mischen und so ein neues Additiv aus einem Substanzgemisch zu erzeugen, das eine graduelle oder stufenweise Transparenzreduktion zu steigenden Temperaturen bewirkt. Ein gemischtes Additiv ist beispielsweise bei Verwendung einer homologen Alkanreihe möglich oder bei anderen homologen oder chemisch ähnlichen Substanzen, bei denen die Schalttemperatur über das Molekulargewicht oder den Polymerisationsgrad eingestellt wird.

Wie oben zum Stand der Technik beschrieben, sind auch thermotrope Additive bekannt, die aus Polymerblends bestehen, die bei einer Schalttemperatur Entmischungseffekte zeigen und dadurch die Trübung erhöhen. Diese zweiphasigen mischbaren und entmischbaren Polymerblends können beispielsweise durch dreiphasige Blends ersetzt werden, deren drei Phasen unterschiedliche Brechungsindizes aufweisen. Im Falle von Copolymerisaten werden Block-Copolymerisate verwendet, deren durch die Blöcke erzeugte Domänen unterschiedliche Brechungsindizes aufweisen. Der Fachmann kann ohne Weiteres ihm bekannte thermotrope bzw. thermooptische Substanzen auswählen und gemischt im erfindungsgemäßen Sinne einsetzen. Besonders bevorzugt sind C10 bis C30 n-Alkane und/oder entsprechende verzweigte Alkane, die so gemischt werden, dass sie ein stufenweises oder graduelles Schaltverhalten aufweisen.

Weiterhin ist es ebenfalls möglich, die in der EP 1 218 467 B1 (BASF) genannten polymeren Verbindungen in geeigneter Kombination einzusetzen. Bevorzugt sind dabei Mischungen aus verschiedenen Polymeren mit zyklischen Struktureinheiten und verschiedenen Polymeren ohne zyklische Struktureinheiten, wie in der EP 1 218 467 B1 im Einzelnen beschrieben, auf die zur Auswahl von Verbindungen hiermit konkret Bezug genommen wird.

Gemäß einem Aspekt der Erfindung ist demnach die die transparenzregulierende Folienschicht oder Kunststoffschicht eine solche Schicht, die ein oder mehrere Substanzen, ein Polymerblend oder ein Copolymerisat enthält, um eine Transparenzverminderung durch Trübung ab einer Schwellentemperatur zu bewirken. Polymerblends oder Copolymerisate können eingesetzt werden, um thermotrope bzw. thermooptische Schichten zu erzeugen. Alternativ können die thermotropen bzw. thermooptischen Schichten, die für die Erfindung benötigt werden, auch durch Additivieren eines Matrixpolymers mit einem thermotropen Material erhalten werden. Die transparenzregulierende Folie oder Folienschicht enthält demnach in anderen bevorzugten Ausführungsbeispielen ein Additiv, das oberhalb einer Schalttemperatur eine Transparenzverminderung bewirkt, und zwar weiter vorzugsweise eine zunehmende Trübung des Verbundes zu höherer Temperatur. Häufig wird dies dadurch bewirkt, dass das Additiv aus monomeren Substanzen besteht, die jeweils unterhalb einer für die Einzelsubstanz charakteristischen Temperatur kristallin bzw. im festen Zustand vorliegt, der optisch gut transparent sein soll, während oberhalb der Temperatur oder innerhalb eines Schmelzbereichs eine Veränderung zum amorphen oder geschmolzenen Zustand hin eintritt, der eine Trübung bewirkt. Durch Mischen mehrer solcher Monomere wird eine graduelle Transparenzverringerung bzw. eine mehrstufige Transparenzverringerung erreicht.

Gemäß einer besonderen Ausführungsform kann das Additiv verkapselt sein, wie beispielsweise in der DE 10 2007 061 513 A1 (Fraunhofer) beschrieben. Verschiedene verkapselte Additive mit unterschiedlichen Schalttemperaturen oder Schaltbereichen können gemischt eingesetzt werden, um so das gewünschte Schaltintervall zu erzielen. Wie oben bereits beschrieben, kann das Additiv vorzugsweise in einem transparenten Matrixpolymer vorliegen, unverkapselte Additive können in Form kleinster Tröpfchen in das Matrixpolymer einpolymerisiert werden.

Als Additive sind auch bekannte Phase-Change-Materialien (PCMs) geeignet, die am Phasenübergangspunkt ebenfalls ihren Brechungsindex und damit ihre optische Transparenz ändern können. Im Rahmen der Erfindung sind daher organische Phase-Change-Materialien mit kristallinem und optisch transparentem Festzustand, wie u.a. Fette und Öle, ebenfalls geeignet.

US 4,505,953 beschreibt Pellets aus PCMs. Die Phasenübergangstemperaturen sind bei Verwendung als thermotrope Substanzen mit den Schalttemperaturen gleichzusetzen. Als Hüllmaterialien für die pelletierten bzw. verkapselten PCMs werden u.a. Epoxypolymere, Polyurethane, Acrylpolymere, Zelluloseacetat und Polyamide angegeben. Als mögliche PCMs werden angegeben: Polyethylene, Glaubersalz, Natriumsulfat-Decahydrat, Natriumthiosulfat-Pentahydrat, Calziumchlorid-Hexahydrat, Magnesiumnitrat-Hexahydrat, eine eutektische Mischung aus Magnesiumnitrat-Hexahydrat und Ammoniumnitrat, Kaliumfluorid-Tetrahydrat, Natriumacetat-Trihydrat, Stearinsäure, eine eutektische Mischung aus Naphthalin und Benzoesäure und paraffinische Kohlenwasserstoffe.

In alternativen Ausführungsformen können auch Polymerblends oder Copolymerisate, wie beispielhaft in der EP 1 218 467 B1 beschrieben, mit einem Matrixpolymer gemischt werden, um so eine temperaturabhängig transparente Schicht zu ergeben. Wie oben schon beschrieben, ist das Matrixpolymer vorzugsweise ein teilkristallines Polymer, insbesondere ein Polyolefin, Polyolefin-Blend oder Polyolefin-Copolymer, vorzugsweise ausgewählt aus der Gruppe PE, PP, LDPE, EVA und PET.

Die Pflanzenbau-Bedachung nach der Erfindung ist wie schon erwähnt vorzugsweise Teil eines Gewächshauses oder einer geständerten Überdachung, einer Sonnenschutzanlage oder einer beliebigen Feldabdeckung. Agrarfolien zur Feldabdeckung werden dabei auch als Pflanzenbau-Bedachungen aufgefasst, auch wenn sie ohne Draht- oder Ständerkonstruktion eingesetzt werden.

### Masterblend

Die Erfindung umfasst weiter ein Masterblend für die Herstellung einer temperaturabhängig transparenten Folie oder Kunststoffschicht, die für eine Pflanzenbau-Bedachung nach der Erfindung geeignet ist. Die Folien oder Kunststoffschichten für die Erfindung werden vorzugsweise durch Extrusion bzw. Coextrusion oder durch Extrusionsbeschichten auf ein Substrat, wie eine Platte, hergestellt. Das Masterblend ist gekennzeichnet durch einen Gehalt an temperaturabhängig transparenzregulierenden Polymeren und/oder Additiven, die in der extrudierten Folie oder Schicht eine stufenweise oder eine graduelle Transparenzreduktion zu steigenden Temperaturen im Temperaturbereich von 20 bis 50 °C bewirken und wobei im Falle einer graduellen Transparenzreduktion ein Gesamtschalthub zwischen 3 °C bis 30 °C realisiert wird, oder wobei im Falle einer zwei- oder mehrstufigen Transparenzreduktion das Material in dem gewünschten Temperaturbereich ab 20 °C zu höheren Temperaturen mehrere Schalttemperaturen besitzt. Hierfür sind die transparenzregulierenden Polymere und/oder Additive mit einem Matrixpolymer oder Basispolymer gemischt. Das Masterblend zeichnet sich weiterhin durch einen Gehalt an einem teilkristallinen, transparenten Matrixpolymer und optional weiteren Additiven aus. Zu den weiteren Additiven gehören insbesondere mineralische Additive für die Einstellung einer Thermizität, UV-Schutz-Additive, ggf. Weichmacher und andere üb-liche Zusätze, wie sie für Agrarfolien gebräuchlich und dem Fachmann bekannt sind. Das Masterblend wird hergestellt, indem das gewünschte Kunststoffmaterial für die Folie oder Schicht hergestellt und abschließend granuliert oder pulverisiert wird. Dieses Pulver oder Granulat stellt das Masterblend dar, das aufgeschmolzen und extrudiert wird. Für die Folienherstellung ist die Blasextrusion bevorzugt, während die Plattenbeschichtung vorzugsweise als Extrusionsbeschichtung durch eine Schlitzdüse erfolgt.

Andere Verarbeitungsweisen sind möglich und dem Fachmann bekannt.

### Verfahren zur Kultivierung von Nutzpflanzen

Die der Erfindung zugrunde liegende Aufgabe wird weiterhin durch ein Verfahren zur Kultivierung von Nutzpflanzen in einem Gewächshaus, unter einer Bedachung oder einer Folienabdeckung gelöst, bei dem der Lichteinfall auf die Pflanzen mit Hilfe der Pflanzenbau-Bedachung nach der Erfindung temperaturabhängig reguliert wird. Die Vorteile dieses Verfahrens sind oben im Zusammenhang mit der Pflanzenbau-Bedachung bereits beschrieben.

In Weiterbildung der Erfindung wird das Verfahren so geführt, dass die Bedachung bzw. Abdeckung zeitweilig zusätzlich eingekalkt wird.

Im Folgenden wird zunächst das übliche Einkalken - ohne die erfindungsgemäße Bedachung - beschrieben: typischerweise finden in südeuropäischen Ländern im Jahr drei Einkalkungen statt, die in Abhängigkeit der Witterung und der unter der Bedachung befindlichen Pflanzenarten sowie deren Wachstumsphasen mindestens in den Monaten Februar bis Mai mit unterschiedlichen Konzentrationen aufgebracht werden. Die im Winter, im Januar, startende Kampagne benötigt in der Regel zunächst keinen Kalk. Im weiteren Verlauf der Kampagne erfolgt das Einkalken zwischen Februar und Mai bis zum Erreichen in einer maximalen Beschattung im Übergangszeitraum Frühjahr/Sommer. Die im Hochsommer, etwa im August, startende Kampagne wird mit einem maximalen Anteil an Kalk gestartet, um die Jungpflanzen zu schützen. Mit abklingendem Sommer und Übergang in den Herbst wird der Kalk entfernt.

Die Beschattungsintensität sollte sich u.a. danach richten, ob die Pflanzen sich im vegetativen oder generativen Wachstum befinden. Die vegetative Phase umfasst das Wachstum der Pflanzenorgane, die der Ernährung der Pflanze dienen (Wurzeln, Blätter und Sprossanteil). Unzureichendes Licht führt zu einem schnellen Wachstum der Pflanze mit vergleichsweise wenigen Trieben und schlecht ausgebildetem Wurzelwerk. Generatives Wachstum liegt vor, wenn die Pflanzenorgane zur geschlechtlichen Fortpflanzung (Bildung von Blüten, Früchten und Samen) entwickelt werden. Ein Überhang an Licht bewirkt schlecht entwickelte Blüten sowie die Bildung von Flecken auf den Früchten, die im weiteren Verlauf zu weichen Stellen und einer deutlichen Qualitätsabnahme der Früchte führen. Der Übergang vom vegetativen zum generativen Wachstum ist u.a. von der Tageslichtdauer abhängig. Das Vorliegen von zusätzlichem Licht in den Morgen- und Abendstunden sowie einer ausreichenden Beschattung in den Mittags- und Nachmittagsstunden begünstigt im Allgemeinen das Wachstumsverhalten.

Die erfindungsgemäße Pflanzenbau-Bedachung ermöglicht nun das für die Pflanzenentwicklung besonders vorteilhafte Abschatten der Mittagssonne, wobei durch die graduelle oder stufenweise Transparenzreduktion ein möglichst hoher Anteil an PAR-Strahlung erhalten bleibt und viel diffuses Licht erzeugt wird. Je nach Ausführung der Intensität (Höhe) des Schalthubes kann in Abhängigkeit von Jahreszeit und Vegetationsperiode zusätzlich Strahlung durch Einkalken von den Kulturen abgehalten werden, falls dies erforderlich erscheint. Das Einkalken auf der erfindungsgemäßen Pflanzenbau-Bedachung erfolgt jedoch nur kürzer als es bei einer normalen transparenten Gewächshausfolie üblich ist. Der Schalthub kann auch so ausgeführt sein, dass ein Kalken vermieden werden kann.

Das Einkalken auf der erfindungsgemäßen Pflanzenbau-Bedachung erfolgt in südeuropäischen Ländern vorzugsweise nur zwischen etwa April und September, oder auch zwischen März und Oktober. Dies bedeutet, dass das Folien- oder Plattenmaterial in den erfindungsgemäßen Pflanzenbau-Bedachungen die Klimabedingungen in der Übergangszeit Winter/Frühling sowie Frühling/Sommer optimal reguliert und dass nur während der Hochsommerperiode ein zusätzliches Einkalken angezeigt sein kann.

In milderen Klimazonen, beispielsweise in Norddeutschland, wird die erfindungsgemäße Pflanzenbau-Bedachung ohne Einkalken verwendet.

Die Erfindung bewirkt ein kräftigeres Wachstum der Jungpflanzen sowie ein robustes Wurzelwerk durch Einstellung der optimalen Licht- und Temperaturverhältnisse. Es wird eine höhere Produktivität und eine höhere Pflanzenqualität erreicht.

### ARBEITSERGEBNISSE - BEISPIELFOLIE

Die Musterfolie besteht aus dem Basispolymer EVA mit üblichen Additiven und thermotropem Additiv aus einem fein in dem EVA verteilten n-Alkangemisch aus unterschiedlich schweren Alkanen, das eine gradierte Änderung der Transmission in einem Temperaturbereich von 28 bis 40 °C bewirkt. Diese Folie wurde nach den Kriterien, die kommerziellen Folien für den Gewächshausbau zugrunde gelegt werden, in Almeria, Spanien im Feldversuch geprüft. Zusätzlich wurden folgende Laborergebnisse erhalten:
- bei konstanter Temperatur und Änderung der Strahlungsintensität ist das Transmissionsverhalten stabil, d.h. es ist temperaturabhängig gesteuert und unabhängig von der Strahlungsintensität, sowohl im ON- wie im OFF-Modus,
- die Änderung der Transmission erfolgt gradiert in einem Temperaturbereich von 28 bis 40 °C,
- das Verhalten der Folie ist reversibel wiederholbar.

Die Charakterisierung der optischen Eigenschaften ergab folgende Ergebnisse:

**Tabelle 1**

| **Transmission** | **Thermotrope Folie** | | **Kommerzielle Folie (INDASOL PLUS^{®})** | |
|---|---|---|---|---|
| | OFF-Modus | ON-Modus (50 °C) | ohne Kalk | mit Kalk |
| PAR | 77 % | 60 % | 85 % | 30 % |
| Diffuser Lichtanteil | 70 % | 100 % | 45 % | 80 % |
| IR-A + IR-B | 50 % | 20 % | 60 % | 1 % |

Die Thermizität der thermotropen Folie (Durchlässigkeit für IR-C) ist bereits ohne mineralische Additivierung deutlich geringer (6 %) als die einer kommerziellen Folie mit Zugabe mineralischer Anteile (10 %). Darüber hinaus ist der höhere diffuse Lichtanteil gegenüber der kommerziellen Folie positiv auf das Pflanzenwachstum zu bewerten.

### Vergleichende Beobachtungen des Pflanzenwachstums

Es werden seit Anfang März 2013 2 Testgewächshäuser in Almeria mit jeweils 4 m² Grundfläche betrieben, um vergleichend das Pflanzenwachstum unter einer thermotropen und einer kommerziellen Folie mit Kalk gegenüberzustellen. Insgesamt sind jeweils drei Tomatenpflanzen mit einer Ausgangshöhe von ca. 30 cm und bereits ausgebildeten Blüten eingebracht worden, sowie vier Tomatenpflanzen mit ersten Früchten und einer Höhe von ca. 1 m. Die Bestäubung erfolgt über Hummeln.

Die thermotrope Folie wirkt sich nicht negativ auf die Orientierung und Aktivität der Nutzinsekten zur Bestäubung aus. Gleiches Verhalten ist für Insekten zu erwarten, die im Zuge einer immer stärker angewendeten ökologischen Bekämpfung von Plagen eingesetzt werden.

Nach Einbringung der Pflanzen, die traditionell in den Mutterboden unter Beimischung von Humus und Sand eingepflanzt werden, ist in den ersten Tagen ein stabileres und stressfreieres Verhalten der jüngeren Pflanzen unter der thermotropen Folie beobachtet worden. Diese Beobachtung deutet auf eine schnellere Entwicklung des Wurzelwerkes und damit verbesserter Nährstoff- und Wasseraufnahme hin.

Im Folgenden werden die Prinzipien der Erfindung nochmals anhand von Abbildungen erläutert: Es zeigen:
- Figur 1: schematische Darstellung eines Gewächshausaufbaus im QuerSchnitt,
- Figur 2: schematische Darstellung eines geständerten Bedachungsaufbaus,
- Figur 3: Vergleich der optischen Eigenschaften zwischen erfindungsgemäßem Bedachungsmaterial (oben), Referenzfolie und gekalkter Referenzfolie (unten),
- Figur 4: PAR-Strahlungstransmission gegen Lufttemperatur, Schaltbereich 28 bis 38 °C.

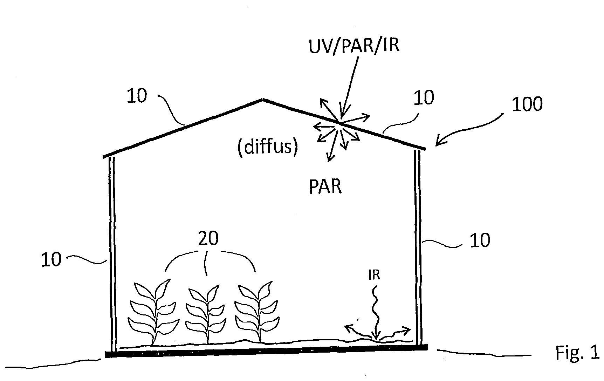

Figur 1 zeigt ein mit 100 bezeichnetes Gewächshaus, bei dem die Pfanzenbau-Bedachung 10 in Form von Folienmaterial für Dach und Wände des Gewächshauses 100 verwendet wird. Im Inneren des Gewächshauses befinden sich Pflanzen 20, die in dem Gewächshaus 100 kultiviert werden. Wie durch Pfeile angedeutet, trifft als globale Strahlung sowohl UV-Strahlung wie auch PAR-Strahlung und IR-Strahlung auf die Bedachung 10, und zwar je nach Sonnenstand in erster Linie von oben. Ein Teil der von außen auftreffenden Strahlung wird immer reflektiert, ein Teil von der Folie, d.h. dem Material der Bedachung 10, absorbiert, und ein Teil durchgelassen bzw. transmittiert. Die durchgelassene Strahlung unterscheidet man in Direkt-Strahlung und in durch Brechung in diffuses Licht umgewandelte Strahlung. Die UV-Strahlung wird teilweise durch das Folienmaterial zurückgehalten. Die Infrarot-Strahlung wird zum Teil durchgelassen. Sie wird vom Boden resorbiert und langsam an die Umgebung wieder abgegeben.

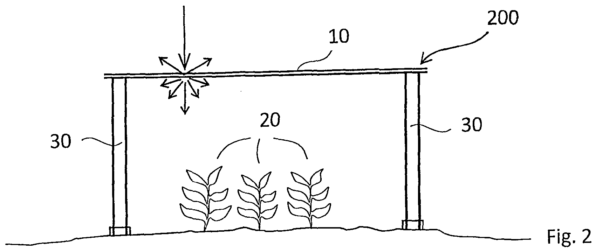

In Figur 2 ist eine geständerte Bedachung 200 gezeigt, bei der die Pflanzenbau-Bedachung 10 eine Platte oder eine Folie in einem Rahmen ist. Die Bedachung 10 wird durch die Ständer 30 gehalten. Bei dieser Konstruktion haben Luft und Bestäubungsinsekten freien Zutritt zu der Kultur aus den Pflanzen 20. Die Konstruktion nach Figur 2 ist beispielsweise für südliche Länder geeignet, in denen die Sonne sehr hoch steht. Sie kann jedoch auch in nördlicheren Regionen bestimmte Kulturen gegen Regen und gleichzeitig gegen zu große Sonneneinstrahlung, beispielsweise während der Mittagshitze schützen.

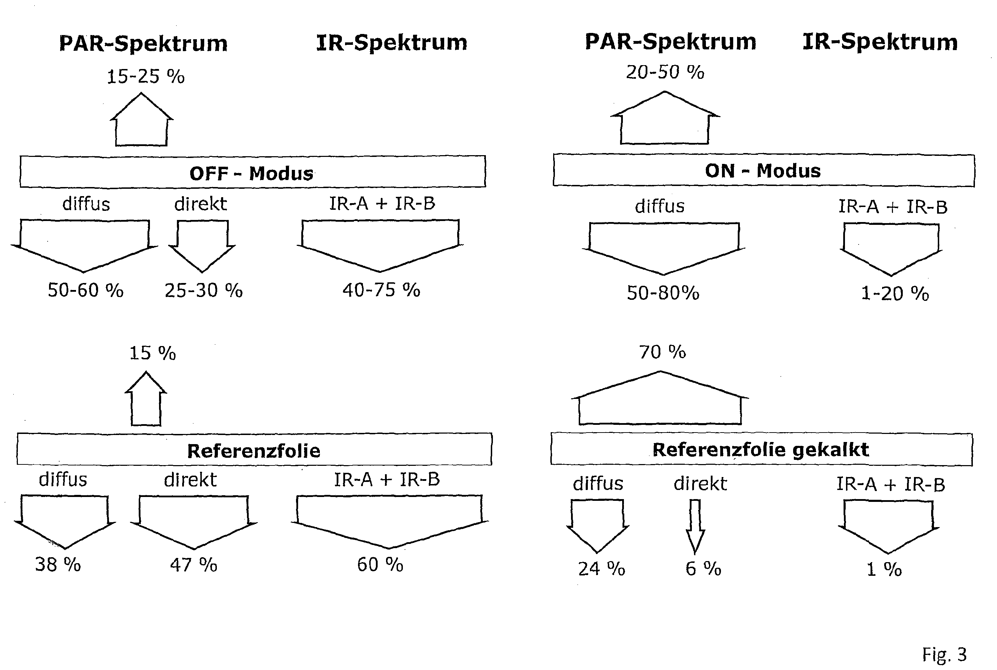

Die optischen Eigenschaften der neuen Folie sind in Figur 3 dargestellt. Im nicht abgeschatteten Zustand (OFF-Modus) wird das für die Pflanze wichtige PAR-Spektrum zu über 70 % durchgelassen und zusätzlich bereits größtenteils in das gewünschte diffuse Licht umgewandelt. Im Vergleich zu der darunter gezeigten Referenzfolie wird also nicht nur ein größerer Lichtanteil des für die Photosynthese wichtigen PAR-Spektrums durchgelassen, zusätzlich ist auch die stärkere Umwandlung in diffuses Licht vorteilhaft. Im Vergleich zur Referenzfolie wird weniger nahes Infrarot (IR-A + IR-B) durchgelassen, allerdings noch so viel, dass gerade für kalte Nachtperioden ein ausgeglichener Temperaturhaushalt unter der Pflanzenbau-Bedachung gewährleistet wird. Nach vollständigem Überschreiten des Schaltintervalls, in dem rechts oben dargestellten ON-Modus wird mehr PAR-Strahlung reflektiert, und die durchtretende Strahlung wird praktisch vollständig in diffuses Licht umgewandelt. Hierdurch werden die Pflanzen sehr gut gegen Verbrennungseffekte durch Direktstrahlung geschützt, ohne dass die Photosynthese durch Lichtmangel beeinträchtigt würde. Im ON-Modus der neuen Folie wird deutlich weniger nahes Infrarot durchgelassen als im OFF-Modus, was wegen des höheren Temperaturniveaus während des ON-Modus auch so gewünscht ist. Im Vergleich hierzu lässt die rechts unten in Figur 3 dargestellte gekalkte Referenzfolie nur 30 % des PAR-Spektrums zur Pflanzenkultur gelangen, da 70 % des einfallenden Lichts reflektiert werden. Der Kalkungsgrad betrug in diesem Beispiel 75 g/m². Trotz des hohen Reflexionsgrades ist der Anteil an diffusem Licht geringer als bei der thermotropen, erfindungsgemäßen Folie. Es verbleiben 6 %, d.h. ca. 20 % des durchgelassenen Lichts als Direktstrahlung. Das Kalken wirkt auf der Lichteinfallseite. Dies erklärt den hohen Reflexionsgrad und die geringe Transmission von nahem Infrarot. Es ist erkennbar, dass das Kalken als eine zusätzliche Maßnahme während besonderer Hitzeperioden auf der erfindungsgemäßen Folie vorgenommen werden kann und damit dazu führt, dass Strahlung insgesamt abgehalten werden kann, einschließlich der Wärmestrahlung.

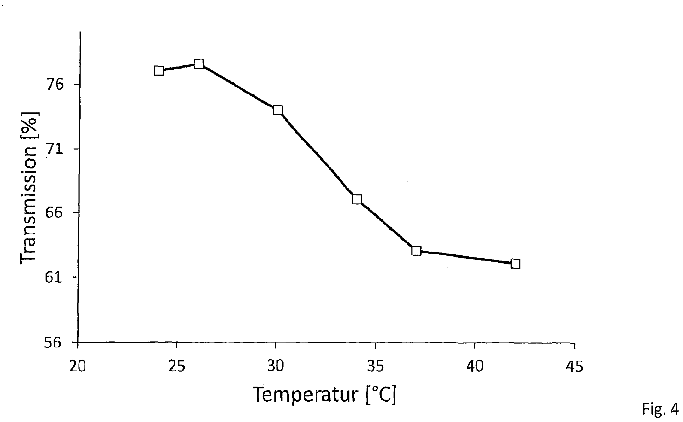

Figur 4 zeigt einen Versuch an einer erfindungsgemäßen Folie auf einer Kammer. Gezeigt ist die PAR-Strahlungstransmission gegen die Lufttemperatur. Die untere Schalttemperatur des Schaltintervalls Tₐ bis T_{b} liegt zwischen 26 und 28 °C. Das Schaltintervall endet bei T_{b} ≃ 42 °C. Wie zu erkennen, verteilt sich der Schalthub über das Schaltintervall, und die Transmission wird mit zunehmender Temperatur immer geringer. Auf diese Weise kann die für die Pflanze wichtige PAR-Strahlung optimal ausgenutzt werden. Die Transmission geht nur um ca. 15 % zurück. Dennoch ist ein guter Schutz bei hohen Temperaturen gewährleistet.

## Patentansprüche

1. Pflanzenbau-Bedachung aus Folien- oder Plattenmaterial mit einer temperaturabhängigen Strahlungstransparenz, die durch wenigstens eine Kunststoffschicht in oder auf einer Platte oder wenigstens eine Folienschicht bereitgestellt wird und die sich durch eine reduzierte optische Transparenz oberhalb einer Schalttemperatur äußert, wobei die Schicht mit der temperaturabhängigen Strahlungstransparenz eine graduelle oder eine zwei- oder mehrstufige Transparenzreduktion zu steigenden Temperaturen in einem Temperaturbereich zwischen 20 °C und 50 °C zeigt, wobei im Falle einer graduellen Transparenzreduktion ein Gesamtschalthub innerhalb eines Temperaturintervalls von 3°C bis 30°C Temperaturdifferenz realisiert wird, oder wobei im Falle einer zwei- oder mehrstufigen Transparenzreduktion das Material in dem gewünschten Temperaturbereich ab 20°C zu höheren Temperaturen mehrere Schalttemperaturen besitzt.

2. Pflanzenbau-Bedachung nach Anspruch 1, **dadurch gekennzeichnet,**
**dass** ein gradiertes Schaltverhalten mit einem Schalthub innerhalb eines Temperaturintervalls von 5 bis 30 °C Temperaturdifferenz, vorzugsweise 10 bis 30 °C Temperaturdifferenz vorhanden ist.

3. Pflanzenbau-Bedachung nach Anspruch 1, **dadurch gekennzeichnet, dass** bei zwei- oder mehrstufiger Transparenzreduktion wenigstens zwei Schalttemperaturen bei ca. 28 °C ± 3 °C und bei ca. 32 °C ± 3 °C vorhanden sind.

4. Pflanzenbau-Bedachung nach einem der Ansprüche 1 bis 3, **dadurch gekennzeichnet, dass** die Transparenzreduktion im Spektralbereich zwischen 400 nm bis 720 nm maximal 50 %, vorzugsweise maximal 20 %, weiter vorzugsweise maximal 5 % beträgt.

5. Pflanzenbau-Bedachung nach einem der Ansprüche 1 bis 4, **dadurch gekennzeichnet, dass** der IR-A- und der IR-B-Anteil der durchgelassenen gegenüber der auftreffenden Strahlung im transparenzreduzierten Zustand (ON-Modus) um wenigstens 5 %, vorzugsweise wenigstens 20 % verringert ist.

6. Pflanzenbau-Bedachung nach einem der Ansprüche 1 bis 5, **dadurch gekennzeichnet, dass** das Folienmaterial eine Mehrschichtfolie ist und dass wenigstens eine darin enthaltene Einzelfolie oder Schicht eine temperaturabhängige Transparenzreduktion bewirkt.

7. Pflanzenbau-Bedachung nach einem der Ansprüche 1 bis 5, **dadurch gekennzeichnet, dass** das Plattenmaterial eine Kunststoffplatte ist, die ein- oder mehrschichtig ist und wenigstens eine Schicht mit temperaturabhängigem Transparenzreduktionsverhalten aufweist, dass die Platte eine mit einer Schicht mit temperaturabhängiger Strahlungstransparenz beschichtete Glas- oder Kunststoffplatte ist oder dass die Platte aus einer zwischen Glasplatten eingeschlossenen Folie oder Schicht mit temperaturabhängiger Strahlungstransparenz gebildet wird.

8. Pflanzenbau-Bedachung nach einem der Ansprüche 1 bis 7, **dadurch gekennzeichnet, dass** die transparenzregulierende Folienschicht oder Kunststoffschicht eine Schicht ist, die ein oder mehrere Substanzen, ein Polymerblend oder ein Copolymerisat enthält, um eine Transparenzverminderung durch Trübung ab einer Schwellentemperatur zu bewirken.

9. Pflanzenbau-Bedachung nach einem der Ansprüche 1 bis 8 , **dadurch gekennzeichnet, dass** die transparenzregulierende Folie oder Folienschicht ein Additiv aus ein oder mehreren Substanzen enthält, das oberhalb einer Schalttemperatur eine graduelle oder eine zwei- oder mehrstufige Transparenzverminderung bewirkt.

10. Pflanzenbau-Bedachung nach Anspruch 9 , **dadurch gekennzeichnet, dass** das Additiv verkapselt ist.

11. Pflanzenbau-Bedachung nach einem der Ansprüche 9 bis 10 , **dadurch gekennzeichnet, dass** das Additiv in einem transparenten Matrixpolymer vor liegt oder dass ein Polymerblend oder ein Copolymerisat mit einem Matrix polymer gemischt ist, wobei das Matrixpolymer vorzugsweise ein teilkristallines Polymer und weiter vorzugsweise ein Polyolefin ist, wobei das Matrixpolymer vorzugsweise ausgewählt ist aus der Gruppe PE, PP, LDPE, EVA, PET.

12. Pflanzenbaubedachung nach einem der Ansprüche 1 bis 11 , **dadurch gekennzeichnet, dass** sie Teil eines Gewächshauses, einer geständerten Überdachung, einer Sonnenschutzanlage oder einer Feldabdeckung ist.

13. Verfahren zur Kultivierung von Nutzpflanzen unter der Pflanzenbau-Bedachung nach einem der Ansprüche 1 bis 12, **dadurch gekennzeichnet, dass** der Lichteinfall auf die Pflanzen mit Hilfe der Pflanzenbau-Bedachung temperaturabhängig reguliert wird.

14. Verfahren nach Anspruch 13, **dadurch gekennzeichnet, dass** die PflanzenbauBedachung zeitweilig zusätzlich eingekalkt wird.

15. Masterblend für die Herstellung einer temperaturabhängig transparenten Folie oder Kunststoffschicht, die für eine Pflanzenbau-Bedachung nach einem der Ansprüche 1 bis 12 geeignet ist, durch Extrusion, **gekennzeichnet durch** einen Gehalt an temperaturabhängig transparenzregulierenden Polymeren und/oder Additiven, die in der extrudierten Folie oder Schicht eine stufenweise oder graduelle Transparenzreduktion zu steigenden Temperaturen im Temperaturbereich von 20 bis 50 °C bewirken, wobei im Falle einer graduellen Transparenzreduktion ein Gesamtschalthub innerhalb eines Temperaturbereiches von 3°C bis 30°C Temperaturdifferenz realisiert wird, oder wobei im Falle einer zwei- oder mehrstufigen Transparenzreduktion das Material in dem gewünschten Temperaturbereich ab 20°C zu höheren Temperaturen mehrere Schalttemperaturen besitzt.

16. Masterblend nach Anspruch 15, **gekennzeichnet durch** einen Gehalt an einem teilkristallinen, transparenten Matrixpolymer und optional weiteren Additiven.

## Claims

1. Plant-growing roof made of film or sheet material with a temperature-dependent transparency to radiation, which is provided by at least one plastic layer in or on a sheet or at least one film layer and manifests itself by a reduced optical transparency above a switching temperature, wherein the layer with the temperature-dependent transparency to radiation exhibits a gradual or a two- or multi-stage transparency reduction at increasing temperatures in a temperature range between 20°C and 50°C, wherein in the case of a gradual transparency reduction an overall switching stroke is realised within a temperature interval of 3°C to 30°C temperature difference, or wherein in the case of a two- or multi-stage transparency reduction the material has several switching temperatures in the desired temperature range from 20°C to higher temperatures.

2. Plant-growing roof according to claim 1, **characterised in that** there is a graduated switching behaviour with a switching step within a temperature interval of 5 to 30°C temperature difference, preferably 10 to 30°C temperature difference.

3. Plant-growing roof according to claim 1, **characterised in that**, in the case of two-stage or multi-stage transparency reduction, at least two switching temperatures are present at approximately 28°C ± 3°C and at approximately 32°C ± 3°C.

4. Plant-growing roof according to one of the claims 1 to 3, **characterised in that** the transparency reduction in the spectral range between 400 nm and 720 nm is at most 50%, preferably at most 20%, more preferably at most 5%.

5. Plant-growing roof according to one of claims 1 to 4, **characterised in that** the IR-A and IR-B component of the transmitted radiation is reduced by at least 5%, preferably at least 20%, in comparison with the incident radiation in the transparency-reduced state (ON mode).

6. Plant-growing roof according to one of claims 1 to 5, **characterised in that** the film material is a multi-layer film and that at least one individual film or layer contained therein effects a temperature-dependent transparency reduction.

7. Plant-growing roof according to one of claims 1 to 5, **characterised in that** the plate material is a plastic plate which is single-layer or multi-layer and has at least one layer with temperature-dependent transparency reduction behaviour, that the plate is a glass or plastic plate coated with a layer having temperature-dependent radiation transparency, or that the plate is formed from a film or layer having temperature-dependent radiation transparency and enclosed between glass plates.

8. Plant-growing roof according to one of claims 1 to 7, **characterised in that** the transparency-regulating film layer or plastic layer is a layer which contains one or more substances, a polymer blend or a copolymer, in order to bring about a reduction in transparency by clouding from a threshold temperature.

9. Plant-growing roof according to one of claims 1 to 8, **characterised in that** the transparency-regulating film or film layer contains an additive comprising one or more substances which, above a switching temperature, causes a gradual or a two- or multi-stage reduction in transparency.

10. Plant-growing roof according to claim 9, **characterised in that** the additive is encapsulated.

11. Plant-growing roof according to one of claims 9 to 10, **characterised in that** the additive is present in a transparent matrix polymer or that a polymer blend or a copolymer is mixed with a matrix polymer, the matrix polymer preferably being a partially crystalline polymer and more preferably a polyolefin, wherein the matrix polymer is preferably selected from the group PE, PP, LDPE, EVA, PET.

12. Plant-growing roof according to one of claims 1 to 11, **characterised in that** it is part of a greenhouse, a raised roof, a sun protection system or a field covering.

13. A method for cultivating crops under the plant-growing roof according to one of claims 1 to 12, **characterised in that the** incidence of light on the plants is regulated in a temperature-dependent manner with the aid of the plant-growing roofing.

14. A method according to claim 13, **characterised in that** the plant-growing roof is additionally whitewashed from time to time.

15. A master blend for the production by extrusion of a temperature-dependent transparent film or plastic layer suitable for a plant-growing roof according to one of claims 1 to 12, **characterized by** a content of temperature-dependent transparency-regulating polymers and/or additives which, in the extruded film or layer, cause a stepwise or gradual transparency reduction at increasing temperatures in the temperature range from 20 to 50°C, wherein in the case of a gradual transparency reduction, a total switching stroke within a temperature range of 3 °C to 30°C temperature difference is realised, or wherein in the case of a two- or multi-stage transparency reduction the material has several switching temperatures in the desired temperature range from 20°C to higher temperatures.

16. Masterblend according to claim 15, **characterised by** a content of a partially crystalline, transparent matrix polymer and optionally further additives.

## Revendications

1. Couverture de culture de plantes constituée en un matériau de feuille ou de plaque ayant une transparence au rayonnement dépendante de la température, laquelle est assurée par au moins une couche en matière plastique dans ou sur une plaque ou par au moins une couche de feuille et qui se manifeste par une transparence optique réduite au-dessus d'une température de commutation,
dans laquelle
la couche ayant une transparence au rayonnement dépendante de la température présente une réduction graduelle de la transparence ou une réduction à deux ou plusieurs niveaux à des températures croissantes dans une plage de températures entre 20 °C et 50 °C,
sachant que dans le cas d'une réduction graduelle de la transparence, il se produit une course de commutation globale dans un intervalle de température de 3 °C à 30 °C de différence de température, ou dans le cas d'une réduction de la transparence à deux ou plusieurs niveaux, le matériau possède plusieurs températures de commutation dans la plage de température souhaitée partant de 20 °C et allant vers des températures plus élevées.

2. Couverture de culture de plantes selon la revendication 1,
**caractérisée en ce qu'**il existe un comportement de commutation gradué avec une course de commutation dans un intervalle de température de 5 à 30 °C de différence de température, de préférence de 10 à 30 °C de différence de température.

3. Couverture de culture de plantes selon la revendication 1,
**caractérisée en ce que** pour une réduction de transparence à deux ou plusieurs niveaux, il existe au moins deux températures de commutation à environ 28 °C ± 3 °C et à environ 32 °C ± 3 °C.

4. Couverture de culture de plantes selon l'une des revendications 1 à 3, **caractérisée en ce que** la réduction de la transparence dans la plage spectrale comprise entre 400 nm et 720 nm est de 50 % au maximum, de préférence de 20 % au maximum, de préférence encore de 5 % au maximum.

5. Couverture de culture de plantes selon l'une des revendications 1 à 4, **caractérisée en ce que** les parts IR-A et IR-B du rayonnement transmis par rapport au rayonnement incident sont réduites d'au moins 5 %, de préférence d'au moins 20 %, dans l'état de transparence réduite (mode ON).

6. Couverture de culture de plantes selon l'une des revendications 1 à 5, **caractérisée en ce que** le matériau de feuille est une feuille multicouche, et **en ce qu'**au moins une feuille individuelle ou une couche contenue dans celle-ci provoque une réduction de la transparence en fonction de la température.

7. Couverture de culture de plantes selon l'une des revendications 1 à 5, **caractérisée en ce que** le matériau de plaque est une plaque en matière plastique qui est monocouche ou multicouche et qui présente au moins une couche ayant un comportement de réduction de la transparence dépendante de la température, **en ce que** la plaque est une plaque de verre ou de matière plastique revêtue d'une couche ayant une transparence au rayonnement dépendante de la température, ou **en ce que** la plaque est formée d'une feuille ou d'une couche ayant une transparence au rayonnement dépendante de la température, enfermée entre des plaques de verre.

8. Couverture de culture de plantes selon l'une des revendications 1 à 7, **caractérisée en ce que** la couche de feuille ou de matière plastique régulant la transparence est une couche contenant une ou plusieurs substances, un mélange de polymère ou un copolymère, pour provoquer une réduction de la transparence par opacification à partir d'une température de seuil.

9. Couverture de culture de plantes selon l'une des revendications 1 à 8, **caractérisée en ce que** la feuille ou couche de feuille régulant la transparence contient un additif composé d'une ou de plusieurs substances qui, au-dessus d'une température de commutation, provoque une réduction graduelle de la transparence ou une réduction à deux ou plusieurs niveaux.

10. Couverture de culture de plantes selon la revendication 9,
**caractérisée en ce que** l'additif est encapsulé.

11. Couverture de culture de plantes selon l'une des revendications 9 à 10, **caractérisée en ce que** l'additif est présent dans un polymère matriciel transparent, ou **en ce qu'**un mélange de polymère ou un copolymère est mélangé avec un polymère matriciel, le polymère matriciel étant de préférence un polymère semi-cristallin et de préférence encore une polyoléfine, le polymère matriciel étant de préférence choisi dans le groupe constitué par **PE, PP, LDPE,** EVA, **PET.**

12. Couverture de culture de plantes selon l'une des revendications 1 à 11, **caractérisée en ce qu'**elle fait partie d'une serre, d'un abri sur pilotis, d'une installation de protection solaire ou d'une couverture de champ.

13. Procédé de culture de plantes utiles dans une serre, sous la couverture de culture de plantes selon l'une des revendications 1 à 12,
**caractérisé en ce que** l'incidence de la lumière sur les plantes est régulée en fonction de la température à l'aide de la couverture de culture de plantes.

14. Procédé selon la revendication 13,
**caractérisé en ce que** la couverture de culture de plantes est en supplément temporairement chaulée.

15. Mélange maître pour la fabrication par extrusion d'une feuille ou couche de matière plastique, transparente en fonction de la température, qui convient pour une couverture de culture de plantes selon l'une des revendications 1 à 12,
**caractérisé par** une teneur en polymères et/ou additifs régulant la transparence en fonction de la température, qui provoquent dans la feuille ou couche extrudée une réduction progressive ou graduelle de la transparence à des températures croissantes dans la plage de températures de 20 à 50 °C,
sachant que dans le cas d'une réduction graduelle de la transparence, il se produit une course de commutation globale dans un intervalle de température de 3 °C à 30 °C de différence de température, ou dans le cas d'une réduction de la transparence à deux ou plusieurs niveaux, le matériau possède plusieurs températures de commutation dans la plage de température souhaitée partant de 20 °C et allant vers des températures plus élevées.

16. Mélange maître selon la revendication 15,
**caractérisé par** une teneur en un polymère matriciel transparent semi-cristallin et éventuellement en d'autres additifs.
